Europäisches Patentamt

European Patent Office

Office européen des brevets

(19)

(11) **EP 0 993 108 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
***H02P 6/18*** *(2006.01)*

(21) Anmeldenummer: **99119590.0**

(22) Anmeldetag: **02.10.1999**

(54) **Verfahren und Vorrichtung zur Ermittlung der Rotorstellung von Synchronmotoren**

Method and apparatus for determining the rotor position of a synchronous motor

Procédé et dispositif pour déterminer la position du rotor d'un moteur synchrone

(84) Benannte Vertragsstaaten:
**DE ES FR IT**

(30) Priorität: **10.10.1998 DE 19846831**

(43) Veröffentlichungstag der Anmeldung:
**12.04.2000 Patentblatt 2000/15**

(73) Patentinhaber: **Diehl AKO Stiftung & Co. KG**
**88239 Wangen im Allgäu (DE)**

(72) Erfinder:
• **Weinmann, Martin, Dipl.-Ing. (FH)**
**88339 Bad Waldsee (DE)**
• **Zeh, Stefan, Dipl.-Ing.**
**88299 Leutkirch (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
**EP-A- 0 801 463          US-A- 4 866 356**
**US-A- 5 448 149**

• **PATENT ABSTRACTS OF JAPAN vol. 1998, no. 08, 30. Juni 1998 (1998-06-30) & JP 10 080180 A (FUJII SEIMITSU KAITENKI SEISAKUSHO:KK), 24. März 1998 (1998-03-24)**

**Beschreibung**

Die vorliegende Erfindung betrifft ein Verfahren zur Ermittlung der Rotorstellung von Synchronmotoren, insbesondere von Mehrphasen-Synchronmotoren, zur Regelung der Synchronmotoren auf optimalen Wirkungsgrad nach dem Oberbegriff des Patentanspruches 1 sowie eine Vorrichtung zur Durchführung dieses Verfahrens nach dem Oberbegriff von Patentanspruch 11.

Elektronisch kommutierte, an einem Gleichspannungsnetz betriebene oder umrichtergespeiste Synchronmaschinen bzw. -motoren sind aus der Literatur und verschiedenen Anwendungsfallen in der Praxis bekannt. Synchronmotoren kommen auch im Bereich geringer Drehzahldynamik vermehrt zum Einsatz, wie zum Beispiel bei Pumpen, Verdichtern oder Waschmaschinen. Neben dem hohen Anzugsdrehmoment haben Synchronmotoren gegenüber Asynchronmotoren u.a. den Vorteil, daß sie mit größeren Luftspalttoleranzen betrieben werden können, wodurch sich konstruktive Vorteile, wie beispielsweise der Direktantrieb der Waschtrommel in Waschmaschinen oder von Pumpen und Verdichtern mit Naßläufer, ergeben.

Es ist bekannt, daß bei Synchronmotoren dann ein optimales Drehmoment und damit ein optimaler Wirkungsgrad erzielt wird, wenn der Vektor des von dem Rotor erzeugten magnetischen Flusses $\Phi_R$ senkrecht auf dem Vektor des von der jeweiligen Statorwicklung erzeugten magnetischen Flusses $\Phi_S$ steht, d.h. wenn das Magnetfeld des Rotors senkrecht zu dem Magnetfeld der jeweiligen Statorwicklung orientiert ist. Dies ergibt sich daraus, daß der Drehmomentvektor T proportional zu $\Phi_R \times \Phi_S$ bzw. der Betrag des Drehmomentvektors T proportional zu $\sin\alpha$ ist, wobei $\alpha$ der räumliche Einstellwinkel zwischen den beiden magnetischen Flüssen $\Phi_R$ und $\Phi_S$ ist. In diesem Fall wird der Rotor des Synchronmotors sozusagen von dem umlaufenden Stator-Drehfeld hinterhergezogen.

Da der von dem Rotor erzeugte magnetische Fluß $\underline{\Phi}_R$ unmittelbar durch die Stellung des Rotors bestimmt wird, können Synchronmotoren beispielsweise dadurch geregelt werden, daß die Stellung des Rotors in Bezug auf das sich drehende Statorfeld erfaßt wird. Hierzu ist es aus dem Stand der Technik bekannt, am Rotorschaft des Synchronmotors Sensoren vorzusehen, welche die Stellung des Rotors zu jedem Zeitpunkt feststellen. Eine solche Regelungsvorrichtung ist beispielsweise aus der DE-A1 195 27 982 bekannt, in der zur Erfassung der Lage, der Drehzahl und/oder der Drehrichtung des Rotors ortsfest angebrachte magnetosensitive Sensoren verwendet werden, deren Meßsignale der Steuerelektronik zugeführt werden.

Weiter ist es bekannt, bei der Regelung von Synchronmotoren ohne derartige Sensoren auszukommen. Falls die Statorwicklung mit einem sogenannten lückenden Strom beaufschlagt wird, d.h. insbesondere mit einem Strom von treppenförmigem oder rechteckförmigem Verlauf mit Phasen, in denen der Strom konstant Null ist, ist es möglich, in diesen sogenannten Stromlücken die durch die Rotordrehung in der Statorwicklung induzierte Spannung, welche auch kurz EMK genannt wird, als an der entsprechenden Motorklemme anliegendes Potential zu erfassen und daraus Informationen über die Stellung des Rotors zu gewinnen. Die Regelung des Synchronmotors erfolgt dann derart, daß die EMK in der Mitte der Stromlücke einen Nulldurchgang haben sollte. Hierbei ist der Stellwert für die Regelung entweder die Frequenz, mit der das Statorfeld geschaltet wird, oder die Amplitude des Statorstromes. Ein solches Verfahren zur Regelung von Synchronmotoren ist zum Beispiel ausführlich in "Sensorless Speed Controlled Brushless DC Drive using the TMS320C242 DSP Controller" von P. Voultoury, Intelligent Motion, May 1998 Proceedings, Seiten 169-180, beschrieben.

In der EP 0 801 463 A1 ist ebenfalls eine solche Ansteuerung mit einem lückenden Strom beschrieben. Dabei wird jede Statorwicklung (natürlich zeitversetzt) über eine Phase von 120° von Strom durchflossen, bleibt für eine Phase von 60° stromlos, wird wiederum über eine Phase von 120° (jetzt entgegengesetzt) von Strom durchflossen und bleibt abschließend wiederum für eine Phase von 60° stromlos. Während der stromlosen Phasen der einzelnen Statorwicklungen wird der Nulldurchgang der EMK bestimmt und aus diesem der Zeitpunkt für die nächste Strombeaufschlagung dieser Statorwicklung errechnet.

Bei bestimmten Drehzahlen, wie sie beispielsweise bei Synchronmotoren für Waschmaschinen oder Trockner erforderlich sind, ergibt sich allerdings bei der Verwendung eines lückenden Statorstromes ein unerwünschtes und im allgemeinen vom Kunden nicht akzeptables Knacken oder Knattern. Dieses Geräusch wird offenbar dadurch verursacht, daß die Statorwicklungen durch die Pulse des lückenden Stromes pulsartig beaufschlagt werden, wobei die hier auftretenden Frequenzen im hörbaren Bereich liegen.

Es ist deshalb bereits bekannt, derartige störende Geräusche bei Synchronmotoren zu vermeiden, indem man in diesen Drehzahlbereichen anstelle des lückenden Stromes einen sinusförmigen bzw. quasi-sinusförmigen Statorstrom einsetzt. Ein solcher quasi-sinusförmiger Statorstrom wird dadurch erzeugt, daß die Leistungsschalter der Drehstrombrücke des Synchronmotors mit Pulsen beaufschlagt werden, die derart pulsweitenmoduliert (PWM) gesteuert werden, daß ein quasi-sinusförmiger Statorstrom entsteht. Die Erzeugung des quasi-sinusförmigen Statorstromes durch eine PWM-Ansteuerung ist beispielsweise in "Digitale Steuerung eines Dreiphasen-Induktionsmotors" von B. Maurice et al. in Design&Elektronik 8 vom 07.04.1992, Seiten 40-46, näher erläutert. Die Steuerschaltung greift in diesem Fall auf gespeicherte Tabellen mit Werten für die Tastverhältnisse der Brückenzweige des Synchronmotors zurück.

Durch die Verwendung eines quasi-sinusförmigen Statorstromes ist es jedoch nicht mehr möglich, die in den Statorwicklungen induzierte EMK zu messen und das Meßergebnis zur Regelung des Synchronmotors zu verwenden, wie dies im Falle des lückenden Stromes der Fall war.

Aus der US 5,448,149 ist nun bekannt, den Nulldurchgang eines sinusförmigen Statorstroms zu erfassen und anschließend die betreffende Statorwicklung für eine kurze Zeit stromlos zu schalten. Währenddessen werden die anderen beiden Statorwicklungen des dreiphasigen Synchronmotors konstant pulsweitenmoduliert angesteuert. Die durch diesen pulsweitenmodulierten Stromfluss in der ersten, stromlosen Statorwicklung induzierte Spannung wird sodann gemessen, um daraus die Rotorposition zu berechnen. Dies erfordert jedoch eine genaue Messung auch der Amplitude der induzierten Spannung und einen nicht unerheblichen Rechenäufwand.

Der vorliegenden Erfindung liegt daher die Aufgabe zugrunde, bei einem Synchronmotor bei der Verwendung eines quasi-sinusförmigen oder sinusförmigen Statorstromes eine Möglichkeit vorzusehen, die Stellung des Rotors ohne die Verwendung von Sensoren zu erfassen, und insbesondere die in den Statorwicklungen induzierte EMK zu messen, um mit Hilfe dieser Meßwerte den Synchronmotor auf optimalen Wirkungsgrad zu regeln.

Diese Aufgabe wird durch ein Verfahren mit den Merkmalen von Patentanspruch 1 gelöst und eine Vorrichtung mit dem Merkmalen von Patentanspruch 11 gelöst.

Indem der eigentlich sinusförmige oder quasi-sinusförmige Statorstrom für eine gewisse Zeitdauer auf Null gesetzt wird, d.h. eine künstliche Stromlücke geschaffen wird, ist es - ähnlich wie im Falle des lückenden Statorstromes - möglich, in dieser Stromlücke die in der Statorwicklung durch die Drehung des Rotors induzierte Spannung - die EMK - und insbesondere die Phasenlage zwischen der induzierten EMK und dem Statorstrom zu messen. Die Regelung des Synchronmotors erfolgt dann derart, daß die in der Statorwicklung induzierte EMK und der Statorstrom in Phase sind, da in diesem Fall das größtmögliche

Drehmoment erreicht wird. Die Zeitdauer der Stromlücke wird dabei im Verhältnis zur Periodendauer des quasi-sinusförmigen Statorstromes sehr kurz gehalten, um den Antrieb des Synchronmotors nicht negativ zu beeinflussen.

Vorzugsweise wird die Stromlücke im quasi-sinusförmigen Statorstrom in der Nähe und insbesondere nach Erkennen eines Nulldurchganges des Statorstromes vorgesehen, da in diesem Fall der Strom schneller auf den Wert Null abkommutieren kann als in anderen Bereichen des quasi-sinusförmigen Stromverlaufes mit höheren Absolutwerten des Statorstromes.

Hierbei erfolgt das Erkennen eines Nulldurchganges des Statorstromes vorteilhafterweise durch Erfassen der Klemmenpotentiale während sogenannter Totzeiten der Ansteuerung der entsprechenden Statorwicklung. Durch Vergleichen der nacheinander erfaßten Klemmenpotentiale kann bei Änderung des Klemmenpotentials ein Nulldurchgang des Statorstromes zwischen den jeweiligen Totzeiten erkannt werden.

Die Erfassung des jeweiligen Klemmenpotentials erfolgt vorzugsweise dadurch, daß während der künstlich erzeugten Stromlücke des Statorstromes in einer Statorwicklung die anderen Statorwicklungen kurzgeschlossen werden und die in der einen Statorwicklung induzierte EMK in der Stromlücke durch Messen des Klemmenpotentials der entsprechenden Statorwicklung in Bezug auf das gemeinsame Klemmenpotential der anderen Statorwicklungen erfaßt wird. In bevorzugter Ausführungsform werden hierbei die kurzzuschließenden Statorwicklungen mit dem negativen Pol oder dem positiven Pol des Spannungszwischenkreises verbunden.

Die Erfassung des jeweiligen Klemmenpotentials erfolgt erfindungsgemäß dadurch, dass während der künstlich erzeugten Stromlücke des Statorstromes in einer Statorwicklung die anderen Statorwicklungen kurzgeschlossen werden und die in der einen Statorwicklung induzierte EMK in der Stromlücke vorzugsweise durch Messen des Klemmenpotentials der entsprechenden Statorwicklung in Bezug auf das gemeinsame Klemmenpotential der anderen Statorwicklungen erfasst wird. In bevorzugter Ausführungsform werden hierbei die kurzzuschliessenden Statorwicklungen mit dem negativen Pol oder dem positiven Pol des Spannungszwischenkreises verbunden.

Bei dem Verfahren zum Erkennen eines Nulldurchganges eines das Vorzeichen wechselnden Statorstromes eines Synchronmotors wird das Klemmenpotential während aufeinander folgender Totzeiten der Ansteuerung der entsprechenden Statorwicklung erfaßt; aus dem Vergleich der während zweier Totzeiten erfaßten Klemmenpotentiale wird ein Nulldurchgang des Statorstromes zwischen den beiden Totzeiten erkannt, wenn sich das Klemmenpotential geändert hat.

Ferner ist es eine Aufgabe der vorliegenden Erfindung, eine Vorrichtung zur Durchführung der vorgenannten Verfahren bereitzustellen.

Diese Aufgabe wird durch eine Vorrichtung mit den Merkmalen des Anspruches 12 gelöst.

Erfindungsgemäß ist bei Verwendung eines sinusförmigen - oder quasi-sinusförmigen Statorstromes wenigstens eine Motorklemme, vorzugsweise alle Motorklemmen, zur Erfassung des Klemmenpotentials der zugehörigen Statorwicklung mit der Motorsteuerung verbunden, so daß das Klemmenpotential als Reglereingangsgröße für die Regelung des Synchronmotors verwendet werden kann.

Weitere Ausgestaltungen und Weiterbildungen der Erfindung sind Gegenstand weiterer Unteransprüche.

Die Erfindung wird nachfolgend anhand eines bevorzugten Ausführungsbeispieles unter Bezugnahme auf die beiliegende Zeichnung näher erläutert. Darin zeigen:

Fig. 1        das Ersatzschaltbild eines einphasigen Synchronmotors;

Fig. 2        ein Zeigerdiagramm der in Fig. 1 dargestellten elektrischen Größen;

Fig. 3        eine Schaltungsanordnung zur Ansteuerung eines Dreiphasen-Synchronmotors gemäß der vorliegenden Erfindung;

Fig. 4        eine schematische Darstellung des Kurvenverlaufes des Statorstromes;

Fig. 5A-D     eine schematische Darstellung der Schaltsequenzen der Ansteuersignale, der Klemmenspannungen der Motorphasen, der induzierten Motorspannung und des Statorstromes für vier unterschiedliche Fälle zur Erläuterung des erfindungsgemäßen Verfahrens; und

Fig. 6        eine schematische Darstellung zur Erläuterung der Erfassung der induzierten EMK.

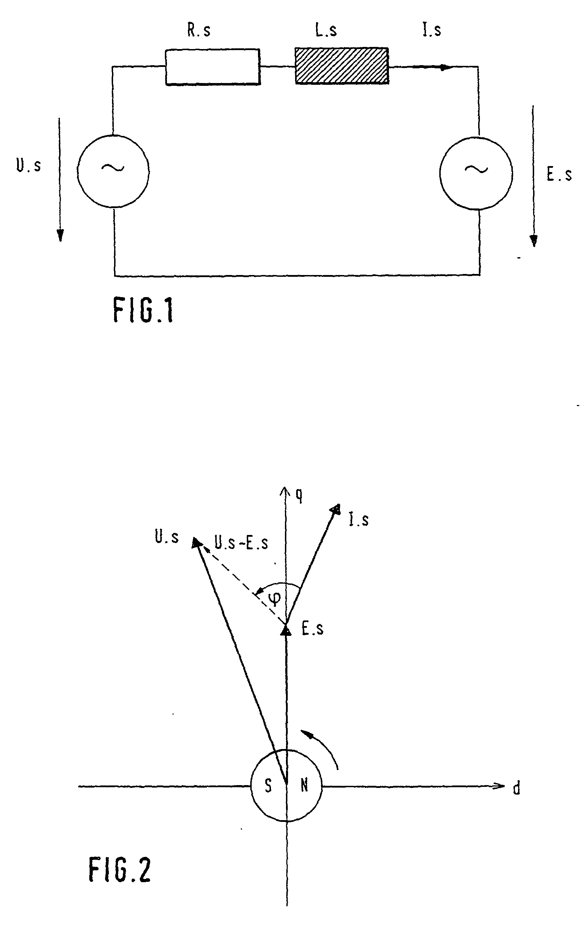

Als Grundlage der folgenden Betrachtungen wird zunächst anhand von Fig. 1 das Ersatzschaltbild eines einphasigen Synchronmotors erläutert. Die Statorwicklung eines Synchronmotors weist jeweils einen Strangwiderstand R.s und eine Stranginduktivität L.s auf An die Statorwicklung wird von einem Umrichter die Spannung U.s in Form einer Wechselspannung angelegt. Außerdem wird in der Statorwicklung durch den beispielsweise einen Permanentmagneten aufweisenden Rotor eine Spannung E.s induziert, welche auch kurz mit EMK bezeichnet wird.

In Fig. 2 sind die in Fig. 1 dargestellten elektrischen Größen und ihre Zusammenhänge in Form eines Zeigerdiagrammes dargestellt. Das Zeigerdiagramm von Fig. 2 ist dabei rotorflußorientiert, d.h. die d-Achse zeigt immer in Richtung des magnetischen Flusses $\Phi_R$ des Rotors. Zur d-Achse um 90° voreilend liegt die q-Achse. Aufgrund des Induktionsgesetzes (induzierte Spannung E.s ist proportional zum Differentialquotienten des magnetischen Flusses nach der Zeit $d\Phi_R/dt$) liegt die in der Statorwicklung induzierte EMK immer in der q-Achse, eilt also dem magnetischen Fluß $\Phi_R$ des Rotors um 90° voraus.

Die an der Statorwicklung angelegte Spannung U.s ist beispielhaft für einen bestimmten Betriebspunkt eingezeichnet. Der Wechselstrom I.s hinkt der an der Statorwicklung effektiv anliegenden Spannung (U.s - E.s) um den Winkel φ hinterher. Der Winkel φ ergibt sich aus den Motorkenngrößen und der betrachteten Drehzahl ω des Rotors gemäß φ = arctan (ω · L.s/R.s).

Der Erfindung liegt nun die Erkenntnis zugrunde, daß der Betriebspunkt des Synchronmotors mit dem optimalen Wirkungsgrad, d.h. mit dem größten Drehmoment, derjenige ist, bei welchem der in der Statorwicklung fließende Strom I.s und die in der Statorwicklung induzierte EMK E.s in Phase sind.

Dies ergibt sich zum einen daraus, daß, wie bereits in der Beschreibungseinleitung dargelegt, das größte Drehmoment dann existiert, wenn der magnetische Fluß des Rotors $\Phi_R$ und der magnetische Fluß der Statorwicklung $\Phi_S$ aufeinander senkrecht stehen. Außerdem eilt bei einem sinusförmigen Verlauf des Rotorflusses $\Phi_R$ die induzierte EMK E.s dem magnetischen Fluß des Rotors $\Phi_R$ um 90° voraus, wie oben anhand von Fig. 2 erläutert. Ferner eilt bei einem sinusförmigen Statorstrom I.s einerseits die angelegte Spannung U.s dem in der Statorwicklung fließenden Strom I.s um 90° voraus (U.s proportional zu dI.s/dt), und andererseits eilt die angelegte Spannung U.s dem magnetischen Fluß des Stators $\Phi_S$ um 90° voraus (U.s proportional zu $d\Phi_S/dt$). Aus diesen drei vorstehenden Voraussetzungen folgt der oben genannte Zusammenhang zwischen optimalem Wirkungsgrad und Phasenlage zwischen I.s und E.s.

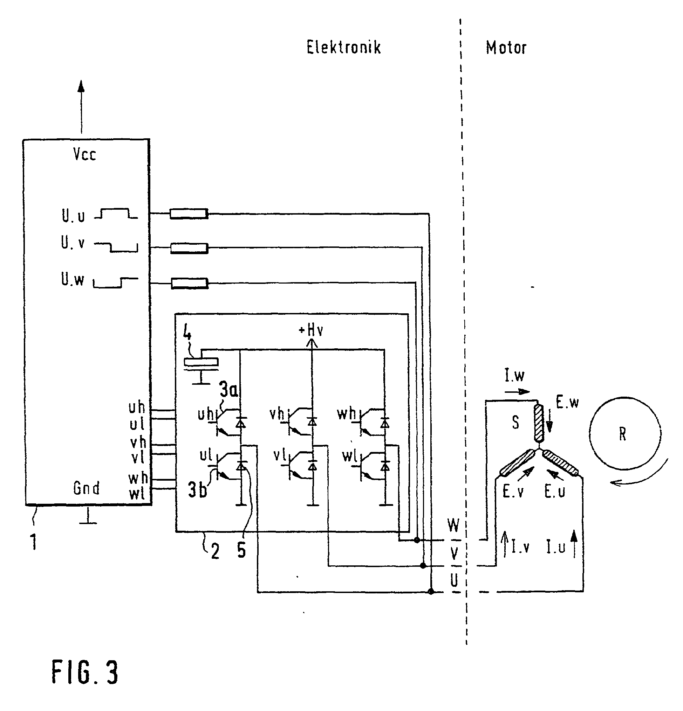

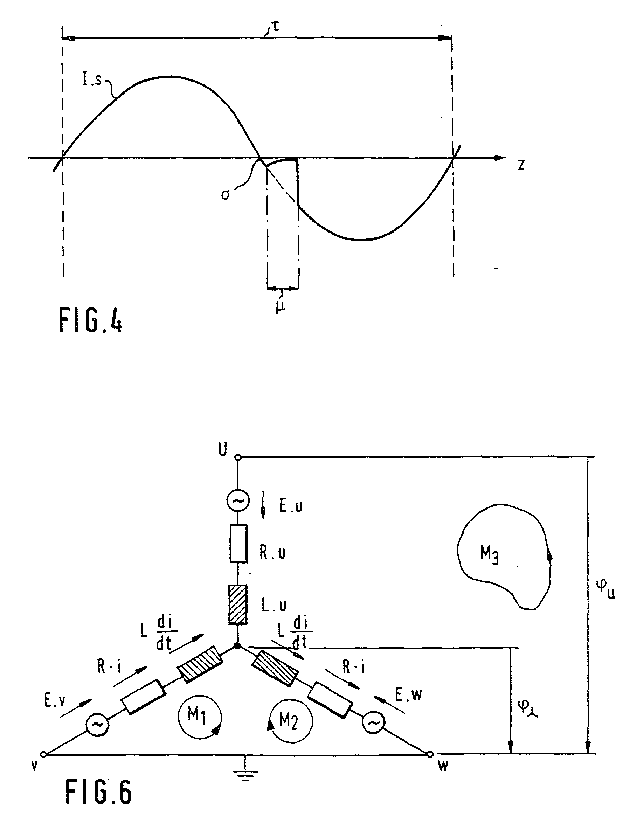

Nachfolgend sollen nun anhand von Fig. 3 ein Ausführungsbeispiel einer Schaltungsanordnung und anhand der Fig. 4 bis 6 das Verfahren zur Ermittlung der momentanen Drehstellung des Rotors eines Synchronmotors in Bezug auf das umlaufende magnetische Stator-Drehfeld gemäß der vorliegenden Erfindung erläutert werden.

In Fig. 3 ist das Ersatzschaltbild eines elektronisch kommutierten Synchronmotors dargestellt. Bei dem Ausführungsbeispiel von Fig. 3 handelt es sich um einen dreisträngigen, sechspulsigen Synchronmotor mit Permanenterregung. Es sei an dieser Stelle aber ausdrücklich darauf hingewiesen, daß die vorliegende Erfindung grundsätzlich für alle Arten von Synchronmotoren anwendbar ist und es sich bei der nachfolgend beschriebenen Schaltungsanordnung nur um ein bevorzugtes Ausführungsbeispiel handelt.

Der Synchronmotor weist in seinem Stator S drei in Stern geschaltete Statorwicklungen auf, die einerseits in einem Sternpunkt und andererseits jeweils mit einer Anschlußklemme u, v, w des Motors verbunden sind. Der Synchronmotor besitzt weiterhin einen Rotor, der einen Permanentmagneten trägt. Die Anschlußklemmen u, v, w sind weiter jeweils mit dem Mittelabgriff zwischen einem oberen Schaltmittel 3a und einem unteren Schaltmittel 3b der Leistungsbrücke 2 verbunden, die beispielsweise als Leistungstransistoren ausgebildet sind.

Die Steueranschlüsse der Leistungstransistoren 3a, 3b sind mit den Ausgängen uh, ul, vh, vl, wh, wl einer Motorsteuerung 1, beispielsweise einem Microcontroller, elektrisch verbunden, wobei die Steueranschlüsse der Schaltmittel 3a, 3b vorzugsweise über nicht dargestellte MOS-Gate Driver angesteuert werden.

Parallel zu den Anschlüssen (Gnd und +HV) einer Konstantstromquelle bzw. eines Zwischenkreisumrichters ist ein Zwischenkreiskondensator 4 geschaltet, der als Glättungskondensator für die Zwischenkreisspannung +HV dient. Ferner ist zu den Schaltmitteln 3a, 3b jeweils eine Freilaufdiode 5 mit entgegengesetzter Durchlaßrichtung parallel geschaltet.

Zusätzlich werden die Klemmenpotentiale U.u, U.v und U.w der Motorklemmen u, v, w jeweils am Mittelabgriff des Brückenzweiges 3a, 3b abgegriffen und über einen geeigneten Widerstand der Motorsteuerung 1 zugeführt. Die derart erfaßten Klemmenpotentiale U.u, U.v, U.w dienen - wie nachfolgend beschrieben - als Eingangsgrößen für das Erkennen eines Stromnulldurchganges des Statorstromes und der Phasenlage zwischen dem Statorstrom I.s und der induzierten EMK E.s.

In Fig. 4 ist nun beispielhaft der sinusförmige bzw. quasi-sinusförmige Verlauf des Statorstromes I.s dargestellt, wie er durch eine pulsweitenmodulierte (PWM) Steuerung der Leistungstransistoren 3a, 3b phasenverschoben in jeder Statorwicklung des Synchronmotors erhalten wird. Wie bereit eingangs erwähnt, ist die Erzeugung eines quasi-sinusförmigen Statorstromes I.s durch eine PWM-Ansteuerung beispielsweise in "Digitale Steuerung eines Dreiphasen-Induktionsmotors" von B. Maurice et al. in Design&Elektronik 8 vom 07.04 1992, Seiten 40-46, näher erläutert. Die Steuerschaltung greift in diesem Fall auf gespeicherte Tabellen mit Werten für die Tastverhältnisse der Brückenzweige des Synchronmotors zurück.

Die Verwendung eines sinusförmigen bzw. quasi-sinusförmigen Statorstromes ist insbesondere bei Drehzahlen, wie sie beispielsweise für Waschmaschinen oder Trockner erforderlich sind, wünschenswert, um die bei der Verwendung eines lückenden Statorstromes auftretenden unerwünschten Geräusche zu vermeiden. Bei der Verwendung eines quasi-sinusförmigen Statorstromes ist es jedoch nicht mehr wie im Falle des lückenden Statorstromes möglich, die in der Statorwicklung induzierte EMK in der Stromlücke des Statorstromes zu messen und das Meßergebnis zur Regelung des Synchronmotors zu verwenden.

Deshalb wird - wie in Fig. 4 schematisch dargestellt - im quasi-sinusförmigen Stromverlauf (gestrichelte Linie) der Statorstrom I.s für eine bestimmte Zeitdauer auf Null gesetzt (durchgezogene Linie), d.h. eine künstliche Stromlücke $\mu$ geschaffen, in der dann die in der jeweiligen Statorwicklung induzierte EMK E.s gemessen werden kann. Die Dauer der Abtastzeit $\mu$ beträgt beispielsweise konstant 50 $\mu$s, während die Periodendauer $\tau$ des quasi-sinusförmigen Statorstromes I.s zum Beispiel bei Waschmaschinen zum Waschen etwa 60 ms und zum Schleudern etwa 3 ms beträgt. Da die Abtastzeit $\mu$ im Verhältnis zur Periodendauer $\tau$ des Stromes I.s sehr kurz bemessen ist, wird der Stromverlauf und damit die Steuerung des Synchronmotors nur unwesentlich beeinflußt. Die tatsächlichen Verhältnisse sind in Fig. 4 zur besseren Veranschaulichung stark überzeichnet dargestellt.

Damit der Statorstrom I.s möglichst schnell auf den Wert Null abkommutiert bzw absinkt, um sodann die in der Statorwicklung induzierte EMK E.s messen zu können, ist es von Vorteil, die Stromlücke $\mu$ möglichst nahe einem Stromnulldurchgang $\sigma$ des Statorstromes I.s vorzusehen. Vorteilhafterweise geschieht dies möglichst unmittelbar nach einem Stromnulldurchgang $\sigma$, da in diesem Falle durch Überwachung des Stromverlaufes ein solcher Stromnulldurchgang $\sigma$ erkannt und direkt anschließend eine künstliche Stromlücke $\mu$ erzeugt werden kann.

In der so erzeugten künstlichen Stromlücke $\mu$ wird nun die durch die Rotordrehung in der Statorwicklung induzierte EMK E.s gemessen und anhand des Vorzeichens und wahlweise des Betrages der EMK E.s und des Stromnulldurchganges kann die Phasenlage zwischen EMK E.s und Statorstrom I.s ermittelt werden. Die Ermittlung der Phasenlage erfolgt vorzugsweise in allen Statorwicklungen des Mehrphasen-Synchronmotors, wodurch eine höhere Genauigkeit der Steuerung erzielt werden kann.

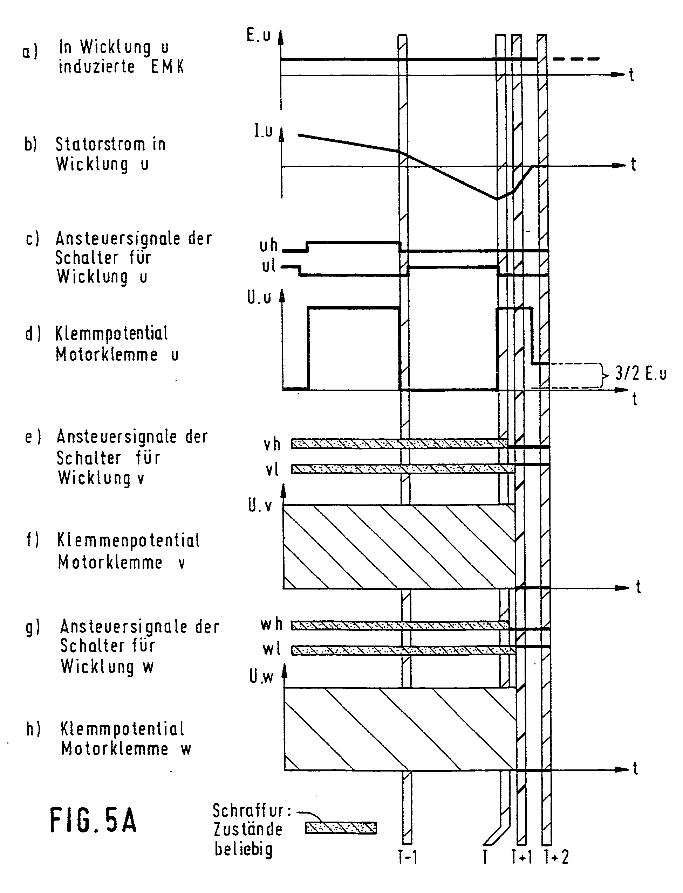

Das Erkennen eines Stromnulldurchganges $\sigma$, das Erzeugen einer künstlichen Stromlücke $\mu$ und das Messen der induzierten EMK E.s während der Stromlücke $\mu$ wird nun anhand der Fig. 5A bis D anhand unterschiedlicher Betriebszustände des Synchronmotors im Detail erläutert. Die nachfolgenden Erklärungen beziehen sich dabei auf den in Fig. 3 dargestellten dreisträngigen, sechspulsigen Synchronmotor. Es sei an dieser Stelle aber nochmals ausdrücklich darauf hingewiesen, daß das Verfahren grundsätzlich auf alle Arten von Synchronmotoren übertragbar ist.

In den Fig. 5A bis D sind jeweils über einer gemeinsamen Zeitachse dargestellt: a) die in der Statorwicklung u induzierte EMK E.u; b) der in der Statorwicklung u fließende Statorstrom I.u; c) die Ansteuersignale uh und ul der beiden Schaltmittel der Statorwicklung u; d) das Klemmenpotential U.u an der Motorklemme u, welches der Motorsteuerung als Steuersignal zugeführt wird; e) die Ansteuersignale vh und vl der beiden Schaltmittel der Statorwicklung v; f) das Klemmenpotential U.v an der Motorklemme v, welches der Motorsteuerung als Steuersignal zugeführt wird; g) die Ansteuersignale wh und wl der beiden Schaltmittel der Statorwicklung w; und h) das Klemmenpotential U.w an der Motorklemme w, welches der Motorsteuerung als Steuersignal zugeführt wird. Dargestellt ist jeweils nur ein enges Zeitfenster in der Nähe eines Stromnulldurchganges des Statorstromes I.u von etwa einigen 100 $\mu$s. Während dieser kurzen Zeitdauer ist der quasi-sinusförmige Verlauf des Statorstromes I.u als solcher nicht erkennbar, und die in der Statorwicklung u induzierte EMK E.u kann als konstant angenommen werden. In analoger Weise werden vorzugsweise auch die Stromnulldurchgänge der Statorströme I.v und I.w in den beiden anderen Statorwicklungen v und w überwacht und die jeweiligen Phasenlagen zwischen der induzierten EMK E.v bzw. E.w und dem Statorstrom I.v bzw. I.w ermittelt.

In Fig. 5A ist zunächst der Fall eines negativen Stromnulldurchganges (Vorzeichenwechsel des Statorstromes I.u von + nach -) dargestellt, bei dem die induzierte EMK E.u noch positiv ist. Dies bedeutet, daß die EMK E.u und damit der Rotor R dem Statorstrom I.u in der Statorwicklung u nacheilen.

Zur Erfassung eines Stromnulldurchganges des Statorstromes ist es möglich, in dem Strompfad einer jeden Statorwicklung ein Strommeßgerät vorzusehen, welches die erfaßten Strommeßwerte an die Motorsteuerung 1 weitergibt. Um jedoch insbesondere aus Kostengründen auf solche zusätzlichen elektronischen Bauteile verzichten zu können, erfolgt die Erkennung eines Stromnulldurchganges im Statorstrom I.u wie folgt.

Bei der Ansteuerung der Leistungstransistoren 3a, 3b eines Brückenzweiges werden sogenannte Totzeiten zwischengeschaltet, während denen weder der obere noch der untere Leistungstransistor leitend geschaltet ist. Hierdurch soll ein überlappendes Schalten zweier Schaltmittel in einem Brückenzweig sicher verhindert werden, was einen Kurzschluß verursachen würde. Während der Totzeiten wird das Spannungspotential U.s an der entsprechenden Phase bzw. Motorklemme u durch die Stromrichtung des Statorstromes I.s in derselben Phase bestimmt.

Fließt der Statorstrom I.s in die Statorwicklung hinein, so kommutiert der Strom während der Totzeit auf die Freilaufdiode 5 des unteren Schaltmittels 3b des entsprechenden Brückenzweiges und das Potential U.s an der Motorklemme der entsprechenden Phase entspricht dem negativen Pol des Spannungszwischenkreises, in diesem Fall Gnd. Fließt der Statorstrom I.s dagegen aus der Statorwicklung heraus, so kommutiert der Strom während der Totzeit über die Freilaufdiode 5 des oberen Schaltmittels 3a des entsprechenden Brückenzweiges auf den positiven Pol des Spannungszwischenkreises (+HV). Bei einem Stromnulldurchgang ändert der Statorstrom seine Polarität, und damit ändert sich auch das Spannungspotential U.s während der Totzeit an der entsprechenden Motorklemme.

Dies ist in Fig. 5A in den Zeitabschnitten T-1 und T gezeigt. Während der ersten Totzeit (Zeitabschnitt T-1), in der beide Schaltmittel 3a, 3b des der Motorklemme u zugeordneten Brückenzweiges nicht leitend geschaltet sind (uh und ul OFF), ist der Statorstrom I.u positiv, fließt also in die Statorwicklung u hinein. Er kommutiert somit über die Frelaufdiode 5 des unteren Schaltmittels 3b des entsprechenden Brückenzweiges auf den negativen Pol (Gnd) des Spannungszwischenkreises. Im Zeitabschnitt T- 1 wird dementsprechend ein Klemmenpotential U.u = Gnd erfaßt. Nach dieser Totzeit findet in dem in Fig. 5A dargestellten Zeitfenster ein negativer Stromnulldurchgang des Statorstromes I.u statt, d.h. der Statorstrom I.s ändert seine Polarität von + nach -. Während der nächsten Totzeit (Zeitabschnitt T) dieses Brückenzweiges ist der Statorstrom I.u somit negativ, fließt also aus der Statorwicklung u heraus. Er kommutiert nun über die Freilaufdiode 5 des oberen Schaltmittels 3a des entsprechenden Brückenzweiges auf den positiven Pol (+HV) des Spannungszwischenkreises. Im Zeitabschnitt T wird dementsprechend ein Klemmenpotential U.u = +HV erfaßt. In den beiden Zeitabschnitten T-1 und T der zwei direkt aufeinander folgenden Totzeiten hat das Klemmenpotential U.u also ein gegensätzliches Spannungspotential, wodurch in der Motorsteuerung 1 erkannt wird, daß zwischen den beiden Zeitabschnitten T-1 und T ein Stromnulldurchgang des Statorstromes I.u stattgefunden hat. Da das Klemmenpotential U.u in den Zeitabschnitten T-1 und T von Gnd auf +HV gewechselt hat, handelt es sich in diesem Fall um einen negativen Stromnulldurchgang des Statorstromes I.u.

Es ist nicht unbedingt erforderlich, daß das Klemmenpotential U.u während jeder Totzeit des entsprechenden Brückenzweiges erfaßt und ausgewertet wird. Je häufiger allerdings das Klemmenpotential U.u in den Totzeiten erfaßt und ausgewertet wird, um so schneller kann ein Stromnulldurchgang des Statorstromes I.s erkannt und um so näher kann eine künstliche Stromlücke an einem solchen Stromnulldurchgang erzeugt werden, wodurch die Länge der Stromlücke bzw. der Veränderung des Stromverlaufes kürzer bemessen werden kann, wie weiter unten noch beschrieben werden wird.

Erfindungsgemäß kann der Stromnulldurchgang eines Statorstromes also sowohl mittels geeigneter Strommeßgeräte als auch durch Detektion der Änderung des Klemmenpotentials zwischen zwei Totzeiten erkannt werden.

Unmittelbar nach Erkennen eines Stromnulldurchganges des Statorstromes I.u im Zeitabschnitt T werden im Zeitabschnitt T+1 beide Schaltmittel 3a, 3b des Brückenzweiges der Motorklemme u nicht leitend (uh und ul OFF) und die beiden anderen Motorklemmen v und w unabhängig von ihren vorhergehenden Schaltzuständen auf ein gemeinsames Spannungspotential geschaltet, also kurzgeschlossen. Zweckmäßigerweise werden hierzu die beiden Motorklemmen v und w über die Schaltmittel 3a, 3b der zugehörigen Brückenzweige auf den negativen Pol (Gnd) oder den positiven Pol (+HV) des Spannungszwischenkreises geschaltet.

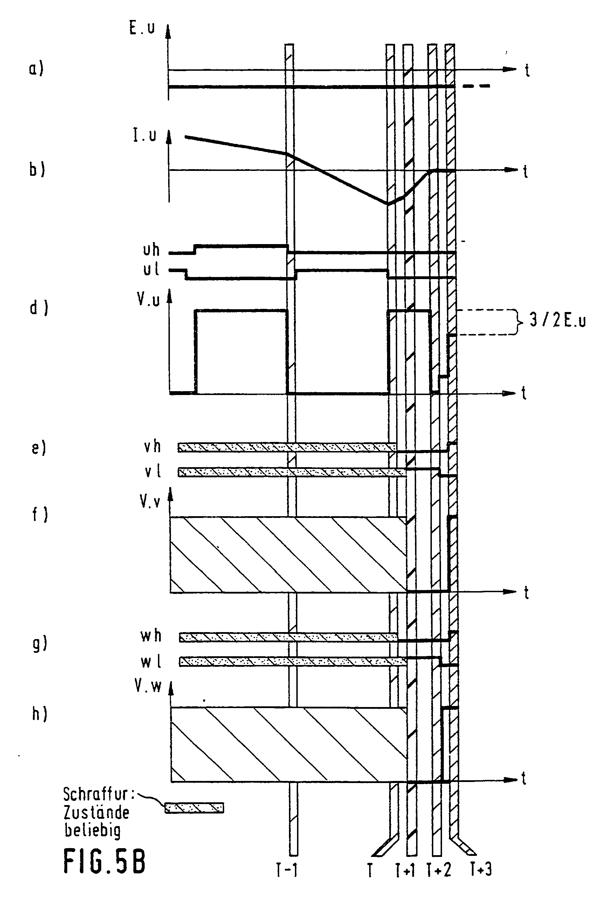

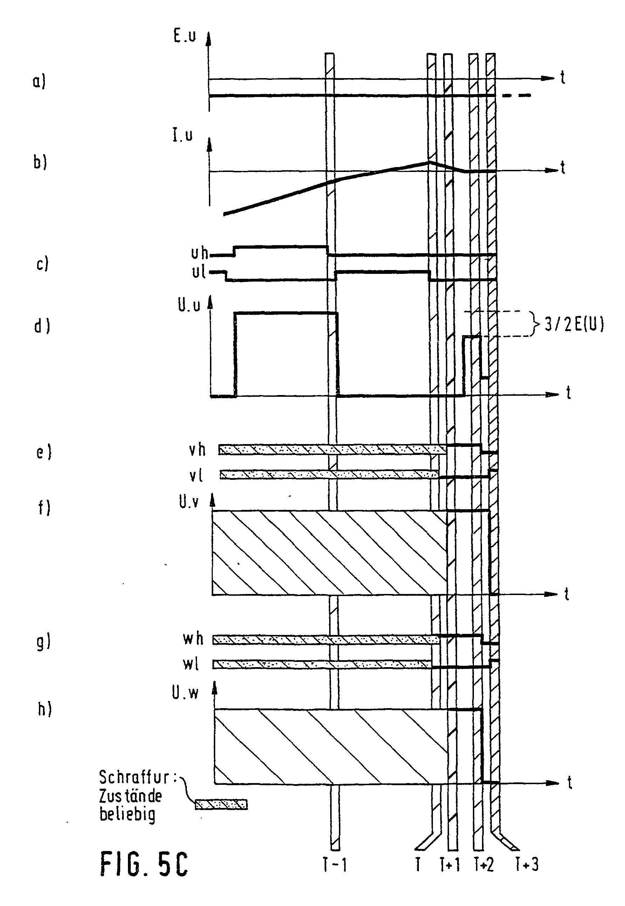

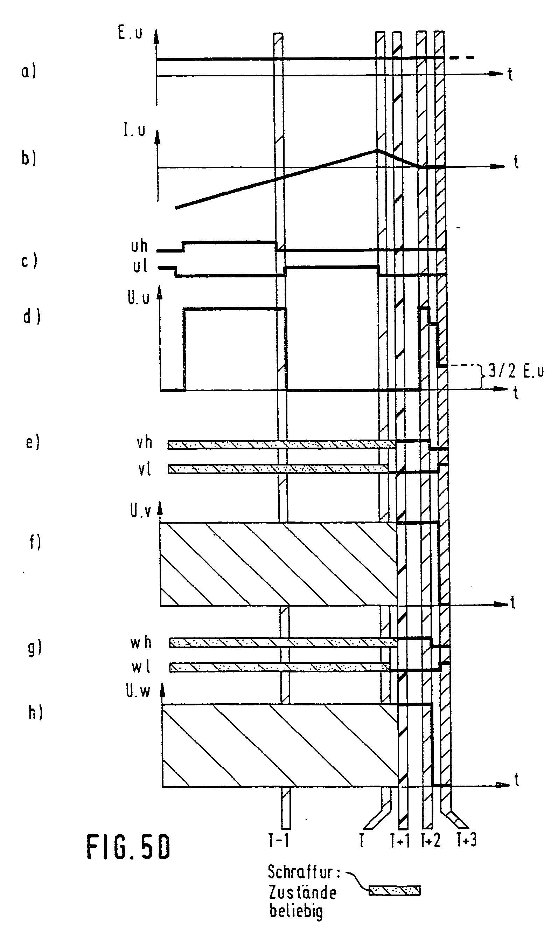

Um ein schnelles Abklingen des Statorstromes I.u auf den Wert Null zu erreichen, werden im Falle eines negativen Stromnulldurchganges des Statorstromes I.u gemäß den Fig. 5A und B die beiden kurzzuschließenden Motorklemmen v und w im Zeitabschnitt T+1 durch Schließen des jeweils unteren Schaltmittels 3b (vl und wl ON) auf den negativen Pol (Gnd) des Spannungszwischenkreises geschaltet. Bei einem positiven Stromnulldurchgang des Statorstromes I.u werden dagegen gemäß den Fig. 5C und D die beiden kurzzuschließenden Motorklemmen v und w im Zeitabschnitt T+1 durch Schließen des jeweils oberen Schaltmittels 3a (vh und wh ON) auf den positiven Pol (+HV) des Spannungszwischenkreises geschaltet. Hierdurch muß der Statorstrom I.u jeweils gegen ein möglichst hohes Potential anlaufen, so daß er in dementsprechend kurzer Zeit auf den Wert Null abkommutiert.

Nachdem der Statorstrom I.u auf den Wert Null abgeklungen ist (Zeitabschnitt T+2), bleiben die beiden Schaltmittel 3a, 3b der Motorklemme u während der Messung der in der Statorwicklung u induzierten EMK E.u nicht leitend geschaltet. Ebenso bleiben die Schaltmittel 3a, 3b der beiden anderen Motorklemmen v und w während des Zeitabschnittes T+2 gegenüber dem Zeitabschnitt T+1 unverändert geschaltet. Das Spannungspotential U.u am Brückenpunkt der Motorklemme u gegenüber dem gemeinsamen Potential (Gnd) der beiden anderen Motorklemmen v und w ist in diesem Fall gerade 3/2·E.u, wie die nachfolgende Betrachtung zeigt.

Fig. 6 zeigt die Verhältnisse im Zeitabschnitt T+2 für den in Fig. 5A dargestellten Fall, d.h. die beiden Schaltmittel 3a, 3b der Motorklemme u sind nicht leitend geschaltet und in der Statorwicklung u fließt kein Strom (I.u = 0). Ferner sind die beiden Motorklemmen v und w miteinander verbunden und auf das negative Potential (Gnd) des Spannungszwischenkreises geschaltet.

Da es sich um ein symmetrisches, sinusförmiges EMK-System handelt, gilt:

$$E.u + E.v + E.w = 0 \tag{1}$$

Ferner gelten in den Maschen $M_1$, $M_2$ und $M_3$ die Beziehungen:

$$M_1: \quad \varphi_Y = -L.v \cdot dI/dt - R.v \cdot I - E.v \tag{2}$$

$$M_2: \quad \varphi_Y = L.w \cdot dI/dt + R.w \cdot I - E.w \tag{3}$$

$$M3: \quad \varphi_u = E.u + \varphi_Y \tag{4}$$

wobei $\varphi_Y$ das Potential im Sternpunkt gegenüber Gnd und $\varphi_u$ das Potential der Motorklemme u gegenüber dem gemeinsamen Klemmenpotential (Gnd) der Motorklemmen v und w ist, also dem Klemmenpotential U.u entspricht. Unter der Voraussetzung, daß die Statorwicklungen gleich aufgebaut sind, d.h. daß L.v = L.w und R.v = R.w gilt, läßt sich herleiten, daß

$$(2) + (3): \quad 2 \cdot \varphi_Y = -E.v - E.w \tag{5}$$

$$(1) \text{ in } (5): \quad 2 \cdot \varphi_Y = E.u$$
$$\Rightarrow \quad \varphi_Y = 1/2 \cdot E.u \tag{6}$$

$$(6) \text{ in } (4): \quad \varphi_u = E.u + 1/2 \cdot E.u$$
$$\Rightarrow \quad \varphi_u = 3/2 \cdot E.u \tag{7}$$

Dies bedeutet, daß im Zeitabschnitt T+2, also während der künstlich erzeugten Stromlücke des Statorstromes I.u, durch Erfassen des Klemmenpotentials U.u = $\varphi_u$ an der Motorklemme u unmittelbar die in der Statorwicklung u induzierte EMK E.u ermittelt werden kann.

Handelt es sich, wie im Falle von Fig. 5A, um einen negativen Stromdurchgang des Statorstromes I.u und um einen positiven Wert von $\varphi_u$ bzw. E.u, so folgt daraus unmittelbar, daß die in der Statorwicklung u induzierte EMK E.u dem Statorstrom I.u nacheilt. Wird neben dem Vorzeichen der induzierten EMK E.u auch deren Absolutwert erfaßt, so läßt sich daraus zusätzlich der Grad der Abweichung der Phasen zwischen E.u und I.u ableiten.

Die Regelung des Synchronmotors erfolgt nun derart, daß die in der Statorwicklung u induzierte EMK E.u während der Stromlücke des Statorstromes I.u möglichst auf den Wert Null gefahren wird. Als Stellwert für diese Regelung kann zum Beispiel entweder die Frequenz, mit der das Statorfeld geschaltet wird, oder die Amplitude des Statorstromes I.u verwendet werden.

Im Gegensatz zu Fig. 5A ist in Fig. 5B ein Fall gezeigt, bei dem bei einem negativen Stromnulldurchgang des Statorstromes I.u die induzierte EMK E.u schon negativ ist, d.h. die EMK E.u und somit der Rotor dem Statorstrom I.u voreilen.

Wie in Fig. 5A wird auch in diesem Fall während der Totzeit im Zeitabschnitt T ein negativer Stromnulldurchgang des Statorstromes I.u zwischen den beiden Zeitabschnitten T-1 und T erkannt. Anschließend wird der Statorstrom I.u ebenfalls auf den Wert Null abkommutiert, indem im Zeitabschnitt T+1 die beiden Schaltmittel 3a, 3b des Brückenzweiges der Motorklemme u nicht leitend (uh und ul OFF) und die beiden anderen Motorklemmen v und w unabhängig von ihren vorhergehenden Schaltzuständen gemeinsam auf den negativen Pol (Gnd) des Spannungszwischenkreises geschaltet werden (vl und wl ON)

Nach dem Abklingen des Statorstromes I.u wird im Zeitabschnitt T+2 das Klemmenpotential U.u an der Motorklemme u gegenüber dem gemeinsamen Klemmenpotential U.v = U.w = Gnd gemessen. Bei der Konstellation von Fig. 5B ergibt sich ein Potential $\varphi_u$ = - 3/2·E.u. Dieses Potential $\varphi_u$ kann aber nicht gemessen werden, da es durch die Freilaufdiode 5 des unteren Schaltmittels 3b des entsprechenden Brückenzweiges der Statorwicklung u auf Gnd gehalten wird. Aus diesem Grunde ist es in diesem Fall notwendig, die Brückenzweige der beiden anderen Motorklemmen v und w auf das Versorgungspotential +HV des Spannungszwischenkreises umzulegen (vh und wh ON). Nun kann im Zeitabschnitt T+3 am Brückenzweig der Motorklemme u das Potential $\varphi_u$ = + HV - 3/2·E.u gemessen werden, aus dem die induzierte EMK E.u direkt ermittelt werden kann.

Im Fig. 5C ist im Gegensatz zu Fig. 5A eine Fallkonstellation dargestellt, bei der bei einem positiven Stromnulldurchgang des Statorstromes I.u die induzierte EMK E.u noch negativ ist, d.h. die EMK E.u und somit der Rotor dem Statorstrom I.u nacheilen.

Wie in Fig. 5A wird auch in diesem Fall während der Totzeit im Zeitabschnitt T ein (hier positiver) Stromnulldurchgang des Statorstromes I.u zwischen den beiden Zeitabschnitten T-1 und T erkannt. Anschließend wird der Statorstrom I.u auf den Wert Null abkommutiert, indem im Zeitabschnitt T+1 die beiden Schaltmittel 3a, 3b des Brückenzweiges der Motorklemme u nicht leitend (uh und ul OFF) und die beiden anderen Motorklemmen v und w unabhängig von ihren vorhergehenden Schaltzuständen gemeinsam auf den positiven Pol (+HV) des Spannungszwischenkreises geschaltet werden (vh und wh ON).

Nach dem Abklingen des Statorstromes I.u wird im Zeitabschnitt T+2 das Klemmenpotential U.u an der Motorklemme u gegenüber dem gemeinsamen Klemmenpotential U.v bzw. U.w gemessen. Bei der Konstellation von Fig. 5C ergibt sich ein gegenüber dem Klemmenpotential U.v = U.w = +HV negativeres Potential $\varphi_u$ = + HV - 3/2·E.u, aus dem die induzierte EMK E.u direkt ermittelt werden kann.

Als letztes ist in Fig. 5D ein Fall gezeigt, bei dem bei einem positiven Stromnulldurchgang des Statorstromes I.u die induzierte EMK E.u bereits positiv ist, d.h. die EMK E.u und somit der Rotor dem Statorstrom I.u voreilen.

Wie in Fig. 5C wird auch in diesem Fall während der Totzeit im Zeitabschnitt T ein positiver Stromnulldurchgang des Statorstromes I.u zwischen den beiden Zeitabschnitten T-1 und T erkannt. Anschließend wird der Statorstrom I.u ebenfalls auf den Wert Null abkommutiert, indem im Zeitabschnitt T+1 die beiden Schaltmittel 3a, 3b des Brückenzweiges der Motorklemme u nicht leitend (uh und ul OFF) und die beiden anderen Motorklemmen v und w unabhängig von ihren vorhergehenden Schaltzuständen gemeinsam auf den positiven Pol (+HV) des Spannungszwischenkreises geschaltet werden (vh und wh ON).

Nach dem Abklingen des Statorstromes I.u wird im Zeitabschnitt T+2 das Klemmenpotential U.u an der Motorklemme u gegenüber dem gemeinsamen Klemmenpotential U.v = U.w = +HV gemessen. Bei der Konstellation von Fig. 5D ergibt sich ein Potential $\varphi_u$ = + HV + 3/2·E.u. Dieses Potential $\varphi_u$ kann aber nicht gemessen werden, da es durch die Freilaufdiode 5 des oberen Schaltmittels 3a des entsprechenden Brückenzweiges der Motorklemme u auf dem Versorgungspotential +HV gehalten wird. Aus diesem Grunde ist es in diesem Fall notwendig, die Brückenzweige der beiden anderen Motorklemmen v und w auf das Grundpotential Gnd des Spannungszwischenkreises umzulegen (vl und wl ON). Nun kann im Zeitabschnitt T+3 am Brückenzweig der Motorklemme u das Potential $\varphi_u$ = + 3/2·E.u gemessen werden, aus dem die induzierte EMK E.u direkt ermittelt werden kann.

Bei der anhand der Fig. 5A bis D beschriebenen Erfassung des Klemmenpotentials U.u während der Stromlücke des Statorstromes I.u (Zeitabschnitt T+2 bzw T+3) wird nicht nur das Vorzeichen / die Polarität der induzierten EMK E.u ausgewertet, sondern auch zum Beispiel über einen in der Motorsteuerung 1 vorgesehenen A/D-Wandler der Betrag / die Amplitude von E.u. Hierdurch kann die aktuelle Phasenverschiebung zwischen Statorstrom I.u und induzierter EMK E.u abgeleitet und eine leistungsfähige Regelung des Synchronmotors erzielt werden.

Im Gegensatz dazu kann man auch als schaltungstechnisch einfachere Auslegung des Reglers ohne eine Amplitudenerfassung der induzierten EMK E.u arbeiten und nur deren Vorzeichen auswerten. In diesem Fall können zur Messung der induzierten EMK E.u die kurzzuschließenden Statorwicklungen v, w in jedem Fall auf den negativen Pol (Gnd) des Spannungszwischenkreises geklemmt werden (vl und wl ON).

Ist die induzierte EMK E.u positiv, so ist auch das an der offenen Motorklemme u gemessene Klemmenpotential U.u positiv (U.u = + 3/2·E.u), wie dies in Zeitabschnitt T+2 von Fig. 5A und in Zeitabschnitt T+3 von Fig. 5D der Fall ist. Ist hingegen die induzierte EMK E.u negativ, so wird das negative Klemmenpotential U.u (U.u = + 3/2·E.u) über die zugehörige Freilaufdiode 5 des unteren Schaltmittels 3b des entsprechenden Brückenzweiges auf den negativen Pol (Gnd) des Spannungszwischenkreises geklemmt, wie dies in Zeitabschnitt T+2 von Fig. 5B und in Zeitabschnitt T+3 von Fig. 5C der Fall ist. Aus diesem Grunde entspricht der Betrag des negativen Klemmenpotentials U.u in bezug auf den negativen Pol (Gnd) des Spannungszwischenkreises maximal der Diodendurchlaßspannung von etwa 1 V.

Bei dieser vereinfachten Regelung des Synchronmotors fragt die Motorsteuerung 1 die erfaßten Spannungspotentiale U.u, U.v, U.w nur auf größer oder kleiner als das Massepotential (Gnd) ab. Wenn die induzierte EMK E.u wesentlich größer ist als die Versorgungsspannung (Vcc) der Motorsteuerung 1, was bei den meisten Anwendungen am Niederspannungsnetz der Fall ist, so kann die Motorsteuerung 1 auch einfacher die erfaßten Spannungspotentiale U.u, U.v, U.w auf größer oder kleiner als Vcc/2 abfragen.

**Patentansprüche**

1. Verfahren zur Ermittlung der momentanen Drehstellung des Rotors eines Synchronmotors in Bezug auf das umlaufende magnetische Stator-Drehfeld durch Erfassung der in mindestens einer Statorwicklung durch den Rotor induzierten Spannung (E.s) in einer Lücke des durch diese Statorwicklung fließenden Statorstromes (I.s),
   **dadurch gekennzeichnet,**
   **dass** bei Verwendung eines sinusförmigen oder quasi-sinusförmigen Statorstromes (I.s) die Lücke des Statorstromes zur Erfassung der durch den Rotor induzierten Spannung (E.s) künstlich erzeugt wird und während der Stromlücke des Statorstromes (I.s) in einer Statorwicklung die anderen Statorwicklungen kurzgeschlossen werden.

2. Verfahren nach Anspruch 1,
   **dadurch gekennzeichnet,**
   **daß** die Stromlücke in der Nähe eines Nulldurchganges des Statorstromes (I.s) erzeugt wird.

3. Verfahren nach Anspruch 1 oder 2,
   **dadurch gekennzeichnet,**
   **daß** der Statorstrom (I.s) nach dem Erkennen eines Nulldurchganges des Statorstromes auf den Wert Null gefahren wird.

4. Verfahren nach Anspruch 3,
   **dadurch gekennzeichnet,**
   **daß** das Erkennen eines Nulldurchganges des Statorstromes (I.s) durch die Verfahrensschritte erfolgt:

   - Erfassen des Klemmenpotentials (U. s) während einer Totzeit (T-1) der Ansteuerung der entsprechenden Statorwicklung;
   - Erfassen des Klemmenpotentials (U.s) während einer nachfolgenden Totzeit (T) der Ansteuerung der entsprechenden Statorwicklung;
   - Vergleich der während der beiden Totzeiten (T-1, T) erfaßten Klemmenpotentiale (U.s) und Erkennen eines Nulldurchganges des Statorstromes (I.s) bei einer Änderung des Klemmenpotentials zwischen den beiden Totzeiten (T-1, T).

5. Verfahren nach einem der vorhergehenden Ansprüche,
   **dadurch gekennzeichnet,**
   **dass** die in der einen Statorwicklung induzierte Spannung (E.s) in der Stromlücke des Statorstromes (I.s) durch Messen des Klemmenpotentials (U.s) der entsprechenden Statorwicklung in Bezug auf das gemeinsame Klemmenpotential der anderen Statorwicklungen erfasst wird.

6. Verfahren nach Anspruch 5,
   **dadurch gekennzeichnet,**
   **daß** die kurzzuschließenden Statorwicklungen gemeinsam mit dem negativen Pol (Gnd) oder dem positiven Pol (+HV) des Spannungszwischenkreises verbunden werden.

7. Verfahren nach Anspruch 6,
   **dadurch gekennzeichnet,**
   **daß** die kurzzuschließenden Statorwicklungen bei einem erfaßten positiven Stromnulldurchgang auf den positiven Pol (+HV) und bei einem erfaßten negativen Stromnulldurchgang auf den negativen Pol (Gnd) des Spannungszwischenkreises geschaltet werden.

8. Verfahren nach einem der vorhergehenden Ansprüche,

**dadurch gekennzeichnet,**
**daß** nur das Vorzeichen der in der Statorwicklung induzierten Spannung (E.s) erfaßt wird.

9. Verfahren nach einem der Ansprüche 1 bis 7,
   **dadurch gekennzeichnet,**
   **daß** das Vorzeichen und die Amplitude der in der Statorwicklung induzierten Spannung (E.s) erfaßt wird.

10. Verfahren nach einem der vorhergehenden Ansprüche,
    **dadurch gekennzeichnet,**
    **daß** die Erfassung der durch den Rotor induzierten Spannung (E.s) in jeder Statorwicklung des Synchronmotors erfolgt.

11. Vorrichtung zur Regelung von Synchronmotoren mit einer Motorsteuerung (1) und mit mehreren Statorwicklungen, von denen jede mit einer entsprechenden Motorklemme (u, v, w) verbunden ist, zur Durchführung des Verfahrens nach einem der vorhergehenden Ansprüche,
    **dadurch gekennzeichnet,**
    **dass** bei Verwendung eines sinusförmigen oder quasi-sinusförmigen Statorstromes (I.s) die Lücke des Statorstromes zur Erfassung der durch den Rotor induzierten Spannung (E.s) künstlich erzeugt wird, wenigstens eine der Motorklemmen (u, v, w) zur Erfassung des Klemmenpotentials (U.s) mit der Motorsteuerung (1) verbunden ist, und während der Stromlücke des Statorstromes in einer Statorwicklung die anderen Statorwicklungen kurzgeschlossen werden.

12. Vorrichtung nach Anspruch 11,
    **dadurch gekennzeichnet,**
    **dass** die Motorsteuerung (1) einen A/D-Wandler zur Erfassung der Amplitude des Klemmenpotentials (U.s) aufweist.

**Claims**

1. Method for determining the instantaneous rotary position of the rotor of a synchronous motor in relation to the revolving magnetic stator rotary field by detecting the voltage (E.s) induced in at least one stator winding by the rotor in an interval in the stator current (I.s) flowing through this stator winding, **characterized in that**, when a sinusoidal or quasi-sinusoidal stator current (I.s) is used, the interval in the stator current for detecting the voltage (E.s) induced by the rotor is produced artificially and, during the current interval in the stator current (I.s) in one stator winding, the other stator windings are short-circuited.

2. Method according to Claim 1, **characterized in that** the current interval is produced in the vicinity of a zero crossing of the stator current (I.s).

3. Method according to Claim 1 or 2, **characterized in that** the stator current (I.s) is moved to the value zero once a zero crossing of the stator current has been identified.

4. Method according to Claim 3, **characterized in that** a zero crossing of the stator current (I.s) is identified by the following method steps:

   - detecting the terminal potential (U.s) during a dead time (T-1) of the driving of the corresponding stator winding;
   - detecting the terminal potential (U.s) during a subsequent dead time (T) of the driving of the corresponding stator winding;
   - comparing the terminal potentials (U.s) detected during the two dead times (T-1, T) and identifying a zero crossing of the stator current (I.s) in the event of a change in the terminal potential between the two dead times (T-1, T).

5. Method according to one of the preceding claims, **characterized in that** the voltage (E.s) induced in the one stator winding is detected in the current interval in the stator current (I.s) by measuring the terminal potential (U.s) of the corresponding stator winding in relation to the common terminal potential of the other stator windings.

6. Method according to Claim 5, **characterized in that** the stator windings to be short-circuited are connected jointly to the negative pole (Gnd) or the positive pole (+HV) of the voltage intermediate circuit.

7. Method according to Claim 6, **characterized in that** the stator windings to be short-circuited are connected to the positive pole (+HV) in the event of a positive current zero crossing being detected and to the negative pole (Gnd) of the voltage intermediate circuit in the event of a negative current zero crossing being detected.

8. Method according to one of the preceding claims, **characterized in that** only the mathematical sign of the voltage (E.s) induced in the stator winding is detected.

9. Method according to one of Claims 1 to 7, **characterized in that** the mathematical sign and the amplitude of the voltage (E.s) induced in the stator winding are detected.

10. Method according to one of the preceding claims, **characterized in that** the detection of the voltage (E.s) induced by the rotor takes place in each stator winding of the synchronous motor.

11. Apparatus for regulating synchronous motors having a motor controller (1) and a plurality of stator windings, each of which is connected to a corresponding motor terminal (u, v, w), for the purpose of carrying out the method according to one of the preceding claims, **characterized in that**, when a sinusoidal or quasi-sinusoidal stator current (I.s) is used, the interval in the stator current for detecting the voltage (E.s) induced by the rotor is produced artificially, at least one of the motor terminals (u, v, w) is connected to the motor controller (1) for the purpose of detecting the terminal potential (U.s), and, during the current interval in the stator current in one stator winding, the other stator windings are short-circuited.

12. Apparatus according to Claim 11, **characterized in that** the motor controller (1) has an A/D converter for the purpose of detecting the amplitude of the terminal potential (U.s).

## Revendications

1. Procédé pour déterminer la position de rotation momentanée du rotor d'un moteur synchrone par rapport au champ magnétique tournant du stator qui l'entoure en détectant la tension (E.s) induite par le rotor dans au moins un enroulement du stator pendant une interruption du courant de stator (I.s) qui circule à travers cet enroulement du stator, **caractérisé en qu'**en cas d'utilisation d'un courant de stator (I.s) sinusoïdal ou quasi-sinusoïdal, l'interruption du courant de stator destinée à détecter la tension (E.s) induite par le rotor est produite artificiellement et pendant l'interruption du courant de stator (I.s) dans un enroulement du stator, les autres enroulements du stator sont court-circuités.

2. Procédé selon la revendication 1, **caractérisé en ce que** l'interruption du courant est produite à proximité d'un passage à zéro du courant de stator (I.s).

3. Procédé selon la revendication 1 ou 2, **caractérisé en ce que** le courant de stator (I.s) est amené à la valeur nulle après une détection du passage à zéro du courant de stator.

4. Procédé selon la revendication 3, **caractérisé en ce que** la détection d'un passage à zéro du courant de stator (I.s) est réalisée par les étapes suivantes :

   - détection du potentiel de borne (U.s) pendant un temps mort (T-1) de l'excitation de l'enroulement correspondant du stator ;
   - détection du potentiel de borne (U.s) pendant un temps mort suivant (T) de l'excitation de l'enroulement correspondant du stator ;
   - comparaison des potentiels de borne (U.s) détectés pendant les deux temps morts (T-1, T) et détection d'un passage à zéro du courant de stator (I.s) en cas de modification du potentiel de borne entre les deux temps morts (T-1, T).

5. Procédé selon l'une des revendications précédentes, **caractérisé en ce que** la tension (E.s) induite dans un enroulement du stator pendant l'interruption du courant de stator (I.s) est détectée en mesurant le potentiel de borne (U.s) de l'enroulement correspondant du stator par rapport au potentiel de borne commun des autres enroulements du stator.

6. Procédé selon la revendication 5, **caractérisé en ce que** les enroulements du stator à court-circuiter sont reliés en commun avec le pôle négatif (Gnd) ou le pôle positif (+HV) du circuit intermédiaire de tension.

7. Procédé selon la revendication 6, **caractérisé en ce que** les enroulements du stator à court-circuiter sont commutés sur le pôle positif (+HV) si le passage à zéro détecté du courant est positif et sont commutés sur le pôle négatif (Gnd) du circuit intermédiaire de tension si le passage à zéro détecté du courant est négatif.

8. Procédé selon l'une des revendications précédentes, **caractérisé en ce que** seul le signe de la tension (E.s) induite dans l'enroulement du stator est détecté.

9. Procédé selon l'une des revendications 1 à 7, **caractérisé en ce que** le signe et l'amplitude de la tension (E.s) induite dans l'enroulement du stator sont détectés.

10. Procédé selon l'une des revendications précédentes, **caractérisé en ce que** la détection de la tension (E.s) induite par le rotor s'effectue dans chaque enroulement du stator du moteur synchrone.

11. Dispositif pour réguler les moteurs synchrones comprenant une commande de moteur (1) et comprenant plusieurs enroulements de stator dont chacun est relié avec une borne (u, v, w) correspondante du moteur, destiné à mettre en oeuvre le procédé selon l'une des revendications précédentes, **caractérisé en ce qu'**en cas d'utilisation d'un courant de stator (I.s) sinusoïdal ou quasi-sinusoïdal, l'interruption du courant de stator destinée à détecter la tension (E.s) induite par le rotor est produite artificiellement, au moins l'une des bornes du moteur (u, v, w) est reliée avec la commande de moteur (1) pour détecter le potentiel de borne (U.s) et pendant l'interruption du courant de stator dans un enroulement du stator, les autres enroulements du stator sont court-circuités.

12. Dispositif selon la revendication 11, **caractérisé en ce que** la commande de moteur (1) présente un convertisseur A/N pour détecter l'amplitude du potentiel de borne (U.s).

R.s      L.s      I.s

U.s      ~                    ~      E.s

# FIG.1

# FIG.2

FIG.3

FIG.4

FIG.6

a) In Wicklung u
   induzierte EMK

b) Statorstrom in
   Wicklung u

c) Ansteuersignale der
   Schalter für
   Wicklung u

d) Klemmpotential
   Motorklemme u

e) Ansteuersignale der
   Schalter für
   Wicklung v

f) Klemmenpotential
   Motorklemme v

g) Ansteuersignale der
   Schalter für
   Wicklung w

h) Klemmpotential
   Motorklemme w

E.u

I.u

uh
ul

U.u

3/2 E.u

vh
vl

U.v

wh
wl

U.w

T-1    T   T+1 T+2

FIG.5A

Schraffur:
Zustände
beliebig

FIG.5B

Schraffur: Zustände beliebig

FIG. 5C

FIG. 5D

Schraffur:
Zustände
beliebig